# FASCICULE DE BREVET EUROPEEN

(11) **EP 1 409 133 B1**
(45) Date de publication et mention de la délivrance du brevet: **19.10.2005**
(21) Numéro de dépôt: 02790195.8
(22) Date de dépôt: 15.07.2002
(51) Int. Cl.: B01J 45/00, B01J 20/24, C02F 1/28

(54) **UTILISATION D'UN MATERIAU A BASE DE FIBRES ORGANIQUES ET/OU INORGANIQUES ET DE CHITOSANE POUR LA FIXATION DES IONS METALLIQUES**
VERWENDUNG EINES AUF ORGANISCHEN UND/ODER ANORGANISCHEN FASERN UND CHITOSAN BASIERENDEN MATERIALS ZUR FIXIERUNG VON METALLIONEN
USE OF A MATERIAL BASED ON ORGANIC AND/OR INORGANIC FIBRES AND CHITOSAN FOR FIXING METAL IONS

(30) Priorité: 25.07.2001 FR 0109949
(43) Date de publication de la demande: 21.04.2004
(73) Titulaire: Ahlstrom Research and Services, 38780 Pont Evêque (FR); Ahlstrom Corporation, 00130 Helsinki (FI)
(72) Inventeur: DOMARD, Alain, F-69006 Lyon (FR); ESPUCHE, Eliane, F-69100 Villeurbanne (FR); DESPOND, Séverine, F-69300 Caluire (FR); CARTIER, Noel, F-38200 Vienne (FR)
(74) Mandataire: Vuillermoz, Bruno
(86) Numéro de dépôt international: PCT/FR2002/002502
(87) Numéro de publication internationale: WO 2003/009939

(56) Documents cités:
- WO-A-00/16877
- GB-A- 2 165 865
- GB-A- 2 338 477
- US-A- 3 635 818
- US-A- 4 992 180
- US-A- 5 010 181

## Description

L'invention concerne l'utilisation d'un matériau à base de fibres organiques et/ou inorganiques et de chitosane pour la fixation d'ions métalliques contenus dans un effluent liquide ou solide. Parmi les effluents contenant des ions métalliques en proportions importantes ou à l'état de traces si un traitement a été préalablement conduit, sont plus particulièrement concernés les effluents provenant notamment de l'industrie minière, nucléaire, chimique, du traitement de surface, mais également agricole, par exemple le lisier de porc ou encore les boues d'épandage utilisées comme fertilisants et provenant des stations d'épuration sans pour autant que cette liste ne soit limitative.

Dans la suite de la description et dans les revendications, par l'expression "fibres organiques et/ou inorganiques", on désigne parmi les fibres organiques, notamment les fibres cellulosiques, les fibres synthétiques du type par exemple, polyester ou polyéthylène, polypropylène, polyamide, polychlorure de vinyle ; les fibres artificielles (par exemple viscose, acétate de cellulose) ; les fibres naturelles (par exemple coton, laine, pâte de bois) ; les fibres de carbone (éventuellement actives), et parmi les fibres inorganiques, notamment les fibres minérales (par exemple verre, céramique).

Le chitosane est un produit de désacétylation de la chitine, élément constitutif des carapaces de crabes, homards, crevettes et autres crustacés. De manière connue, le chitosane présente des propriétés complexantes des ions métalliques, dans des domaines de pH supérieur à 4.

Le document WO 90/02708 décrit une méthode de purification d'effluents aqueux pollués, en particulier d'effluents riches en métaux lourds, au moyen de chitosane sous forme micro-cristalline, c'est-à-dire modifiée. Plus précisément, le chitosane micro-cristallin est incorporé dans une dispersion d'aspect gélifié, laquelle est mise au contact d'un effluent aqueux pollué. Après agitation à température élevée, le chitosane complexé avec le polluant est séparé de la solution par filtration, sédimentation, centrifugation ou toute méthode appropriée. Il est en outre indiqué que le chitosane présente un degré de désacétylation supérieur à 30 %. Compte-tenu de la forme micro-cristalline du chitosane, on peut s'attendre à ce que les fonctions -NH₂ de celui-ci soient impliquées dans le réseau cristallin donc non disponibles pour la complexation métallique. Il s'ensuit que la technique de dépollution décrite dans ce document n'est pas optimale.

Le document GB-2 199 315 décrit une structure support à base de fibres d'origine microbiologiques traitées en solution alcaline de manière à révéler la chitine qu'elles contiennent. D'après le procédé décrit, la culture de mycélium est traitée en milieu alcalin avant ou après être déposée sur une structure en fibres synthétiques du type polyester ou polypropylène.

Le document JP 08 13 2037 décrit un purificateur d'eau, associant chitosane et carbone activé sous forme granulée dans un ratio de 1:20. Bien qu'il soit indiqué que le mélange peut adsorber les métaux lourds, aucune information quantitative n'est donnée. En effet, l'ensemble des résultats est donné par rapport à la capacité du purificateur à éliminer le chlore contenu dans l'eau de ville.

Le document JP 63 04 9212 décrit un filtre adsorbant constitué de fibres de cellulose, de diatomées ou de perlite et de chitosane. Les fibres cellulosiques et les diatomées sont mélangées dans un rapport de 4/1-1/4 en poids, puis le chitosane est rajouté, dilué en solution acide à raison de 10 % en poids. Le filtre est ici utilisé pour la séparation de protéines colloïdales, de micro-particules, de champignons. Aucune information n'est donnée quant à la possibilité d'utiliser ce matériau pour la fixation de métaux lourds. Quand bien même il serait utilisé pour cette application, son efficacité serait moindre puisque les diatomées ou la perlite contiennent des protéines susceptibles d'interagir avec les fonctions amine du chitosane. Dans ce cas, les propriétés de complexation des métaux par le chitosane sont affectées.

Le document EP-A-0 323 732 décrit par ailleurs un matériau composite à base de fibres de cellulose, de chitosane (à raison de 1 à 99 % en poids) et d'acides gras (0,05 à 1 % par rapport au poids de fibres de cellulose). Selon une caractéristique essentielle, le chitosane utilisé dans ce matériau composite présente un degré de désacétylation d'au moins 40 %. A un tel taux, et d'après ce document, le chitosane permet d'améliorer la résistance du papier, en particulier à l'état humide. Aucune mention n'est faite quant à la possibilité d'utiliser ce matériau pour la fixation de métaux lourds présents par exemple dans un effluent aqueux. Quand bien même ce matériau serait utilisé pour une telle application, son efficacité serait faible. En effet, le caractère hydrophobe que confère l'acide gras au papier traité influence la cinétique de sorption de l'eau. En ralentissant la diffusion de l'eau dans le support, l'acide gras diminue également la capacité de complexation. L'accessibilité du chitosane se trouve alors diminuée.

Le document GB 2 338 477 décrit un support à base de fibres cellulosiques et chimiques enduit de chitosane à raison de 3 à 20 % en poids. Aucune indication concernant les caractéristiques du chitosane n'est mentionnée. Le support est utilisé pour la fixation par exemple d'ions métalliques du type arsenic, sulfate de fer et chlorure de magnésium (Ex 6-8). Si le support illustré présente une bonne capacité de complexation des ions métalliques, c'est uniquement pour des débits d'effluents très faibles, et en tous cas, incompatible avec une application industrielle.

Le document GB-A- 2 165 865 décrit l'utilisation de microorganismes producteurs de chitine / chitosane (Hyphae) traités en solution alcaline pour révéler ses constituants puis leur association avec d'autres fibres pour former des matériaux utiles à la capture des ions métalliques.

Le problème que se propose de résoudre l'invention est donc d'améliorer la vitesse de fixation des ions métalliques et par conséquent, le débit de l'effluent à traiter. Or, le Demandeur a constaté que la vitesse de fixation des ions métalliques pouvait être augmentée lorsque l'on combinait une concentration de chitosane faible avec un degré de désacétylation élevé, supérieur à 90 %.

Dès lors, l'invention concerne l'utilisation d'un matériau à base de fibres organiques et/ou inorganiques et de chitosane pour la fixation des ions métalliques contenus dans un effluent qui se caractérise en ce que le chitosane représente entre 0,01 et 20 % en poids sec des fibres, en ce qu'il présente un degré de désacétylation supérieur à 90 %, et en ce que le matériau se présente sous la forme d'une feuille obtenue par voie papetière après mélange du chitosane avec les fibres organiques et / ou inorganiques. de désacétylation du chitosane, on modifiait de manière importante la cinétique de fixation des ions métalliques. Si l'on pouvait s'attendre à ce qu'en augmentant le nombre de sites disponibles de chitosane par désacétylation, on augmente la capacité de fixation, il n'était pas évident en revanche, que la vitesse de fixation soit améliorée dans le même temps.

La fixation des ions métalliques contenus dans un effluent peut trouver plusieurs applications. Il peut s'agir tout d'abord de la fixation de métaux lourds contenus dans un effluent liquide. Le matériau est donc utilisé dans ce cas pour la filtration d'effluents liquides par léchage ou traversée en fonction du degré de pollution de l'effluent. Il peut s'agir ensuite de la fixation d'ions métalliques présents dans le sol, notamment après traitement chimique à base de cuivre par exemple, d'une surface agricole. Dans ce cas, le matériau qui peut correspondre à un papier de paillage est utilisé pour fixer les ions métalliques et ainsi éviter qu'ils ne s'introduisent dans la nappe phréatique. Il peut s'agir enfin de fixation volontaire d'ions métalliques sur le matériau de l'invention soit pour en améliorer les propriétés conductrices, soit former une couche métallique par réduction des ions métalliques fixés, soit pour en faire un matériau présentant des propriétés biocides.

Dans un mode de réalisation avantageux, le chitosane présente un degré de désacétylation supérieur à 95%.

En pratique, le chitosane présente un poids moléculaire compris entre 10⁴ et 10⁶ g.mol⁻¹, de préférence compris entre 10⁵ et 5.10⁵ g.mol⁻¹.

Dans une forme de réalisation avantageuse, le chitosane représente entre 0,01 et 10 %, de préférence entre 0,01 et 5 %, de manière optimale entre 0,01 et 2 % en poids sec des fibres.

Comme déjà dit, le matériau est à base de fibres organiques et/ou inorganiques mais peut avantageusement être constitué de fibres de cellulose.

Selon l'invention, on mélange le chitosane avec les fibres organiques et/ou inorganiques, puis on forme une feuille par voie papetière.

En pratique, le chitosane est utilisé initialement sous forme de sel (acétate, chlorhydrate, etc...).

L'invention trouve une application particulièrement avantageuse dans le traitement de l'eau potable, d'effluents provenant notamment de l'industrie minière, nucléaire, chimique, du traitement de surface, mais également, agricole, par exemple le lisier de porc ou encore les boues d'épandage utilisées comme fertilisants et provenant des stations d'épuration, sans pour autant que cette liste ne soit limitative.

L'invention et les avantages qui en découlent ressortiront mieux des exemples de réalisation suivants.

La figure 1 représente la cinétique de fixation du cuivre par le chitosane seul et le matériau de l'invention à une concentration en cuivre de 0,3125 mg/l.

La figure 2 représente la cinétique de fixation du cuivre par le chitosane seul et le matériau de l'invention à une concentration en cuivre de 0,625 mg/l.

La figure 3 représente la cinétique de fixation du cuivre par le chitosane seul et le matériau de l'invention à une concentration en cuivre de 3,125 mg/l.

La figure 4 représente l'influence de la proportion de chitosane dans le matériau de l'invention vis-à-vis de la fixation des ions cuivre.

### Exemple 1

Dans cet exemple, on compare la cinétique de fixation du cuivre sur du chitosane seul et sur le matériau de l'invention, la masse de chitosane étant de 50 mg, dans des conditions statiques, c'est-à-dire sans flux d'effluent à travers le filtre.

### a/ Chitosane

Le chitosane utilisé présente un poids moléculaire égal à 200 000 g/mol et un degré de désacétylation de 98%.

### b/ Matériau de l'invention

Une feuille à base de fibres cellulosiques est enduite de la solution de chitosane, par technique de couchage de sorte à obtenir un support contenant 2 % de chitosane en poids.

### c/ Protocole

- le chitosane seul ou enduit sur papier est hydraté pendant 12 heures dans 100 ml d'un effluent de NaNO₃ (0,03 M) à pH 6,5,
- on ajoute un volume V d'une solution mère de cuivre,
- on prélève le surnageant à différents instants,
- on dose par I.C.P. (Inductive Coupled Plasma),
- on calcule enfin le facteur de décontamination, lequel correspond au rapport Concentration Initiale / Concentration Finale dans l'effluent.

De ce facteur, on déduit la plus ou moins bonne fonction de décontamination du chitosane seul ou du matériau de l'invention sur la base de l'échelle suivante :
FD = 1 : Pas de décontamination
FD = 7/8 : Bonne décontamination
FD > 10 : Très bonne décontamination

L'étude est menée pour des concentrations en cuivre décroissantes.

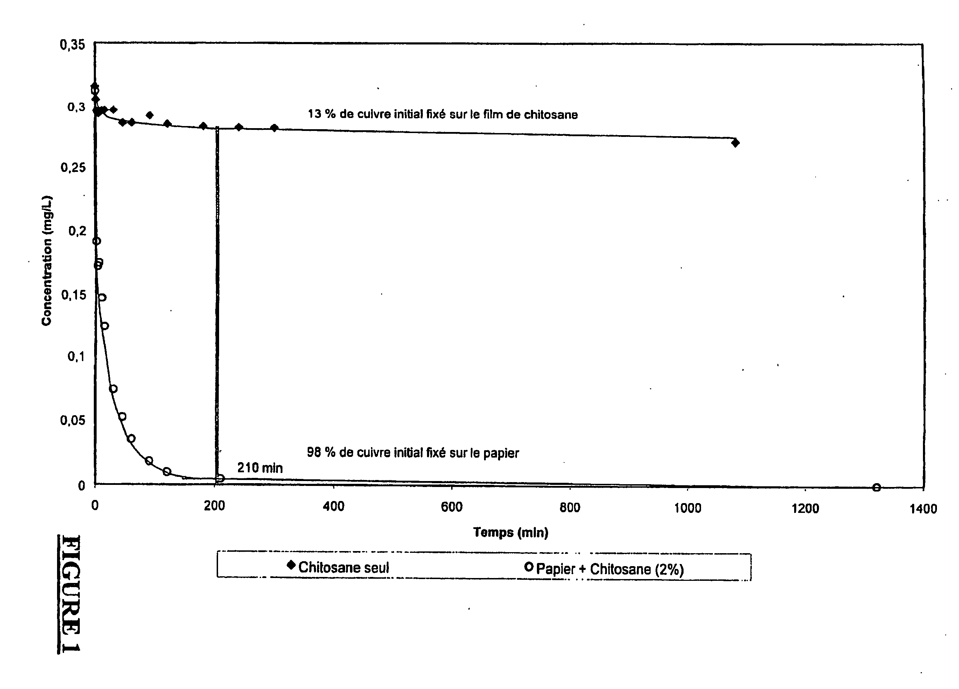

Comme le montre la figure 1, au bout de 210 minutes, 98 % du cuivre est fixé sur le papier enduit de chitosane, alors que 13 % seulement est fixé sur le chitosane seul pour une concentration en cuivre de 0,3125 mg/l.

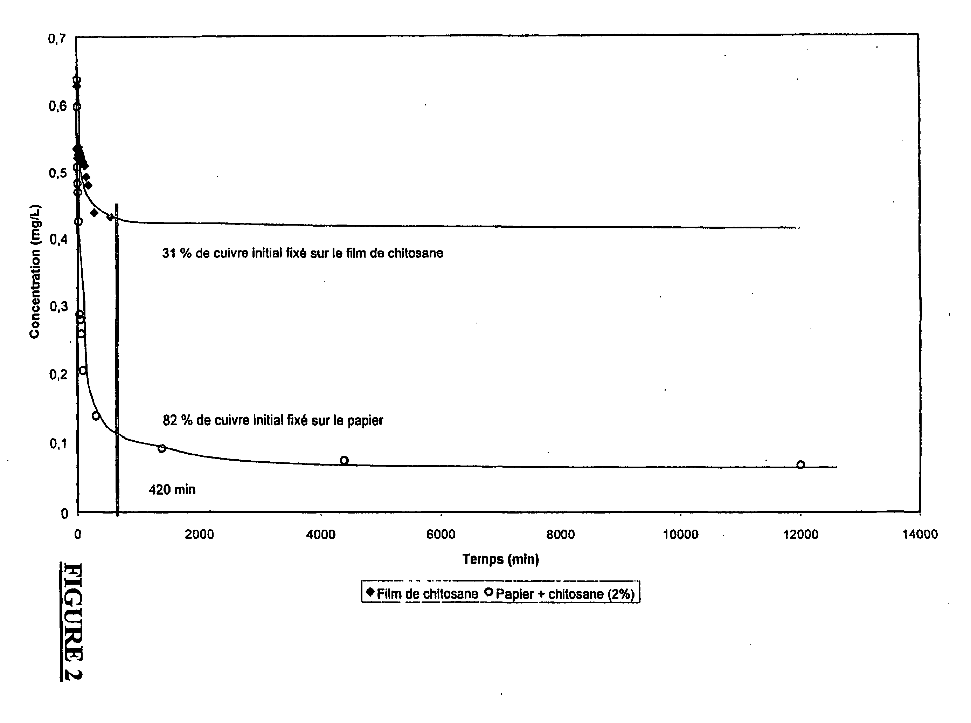

La figure 2 montre que pour une concentration en cuivre de 0,625 mg/l, le papier enduit de chitosane a déjà fixé 82 % de cuivre, alors que dans le même temps, le film de chitosane a fixé 31 % seulement de cuivre.

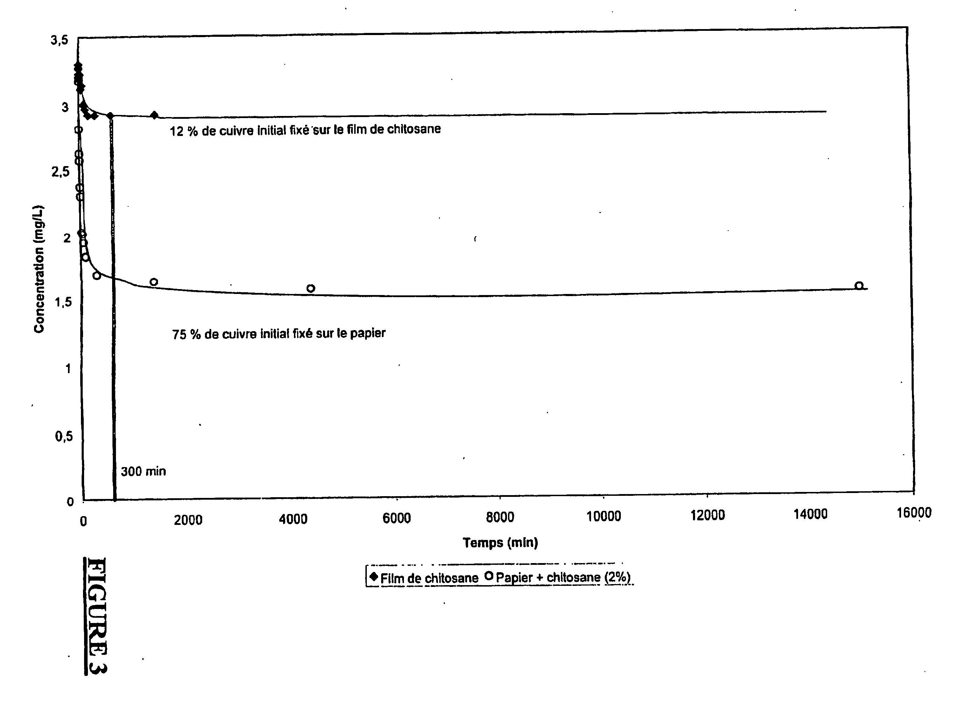

Enfin, pour une concentration de cuivre égale à 3,125 mg/l, 75 % de cuivre est fixé sur un papier enduit au bout de 360 minutes, alors que seulement 12 % de cuivre est fixé sur le chitosane seul (figure 3).

Les facteurs de décontamination sont calculés et représentés dans le tableau ci- après.

| Concentration en cuivre en mg/l | Chitosane seul | Matériau de l'invention |
|---|---|---|
| 6,35 | Décontamination négligeable | 1,1 |
| 3,175 | 1,07 | 1,43 |
| 0,635 | 1,2 | 3,5 |
| 0,3175 | 1,4 | 9,7 |

On observe ainsi que la capacité de fixation du cuivre par le matériau de l'invention est supérieure à celle du chitosane seul, et ce pour l'ensemble des concentrations testées. Par ailleurs, on constate que la cinétique de fixation du cuivre sur le chitosane seul est moins rapide que pour le matériau de l'invention.

En effet, pour une concentration en cuivre de 3,125 mg/l, le facteur de décontamination de 1,07, obtenu après 180 minutes pour le chitosane seul, est obtenu au bout seulement de 4 minutes pour le matériau de l'invention.

De la même façon, pour une concentration en cuivre de 0,625 mg/l, le facteur de décontamination de 1,2, obtenu après 90 minutes pour le chitosane seul, est obtenu après seulement 8 minutes avec le matériau de l'invention.

Pour une concentration en cuivre de 0,3125 mg/l, le facteur de décontamination de 1,4, obtenu après 200 minutes avec le chitosane seul, est obtenu au bout de seulement 20 minutes avec le papier de l'invention.

### Exemple 2

Dans cet exemple, on étudie l'influence de la proportion de chitosane dans une feuille de cellulose vis-à-vis de sa capacité de fixation des ions cuivre.

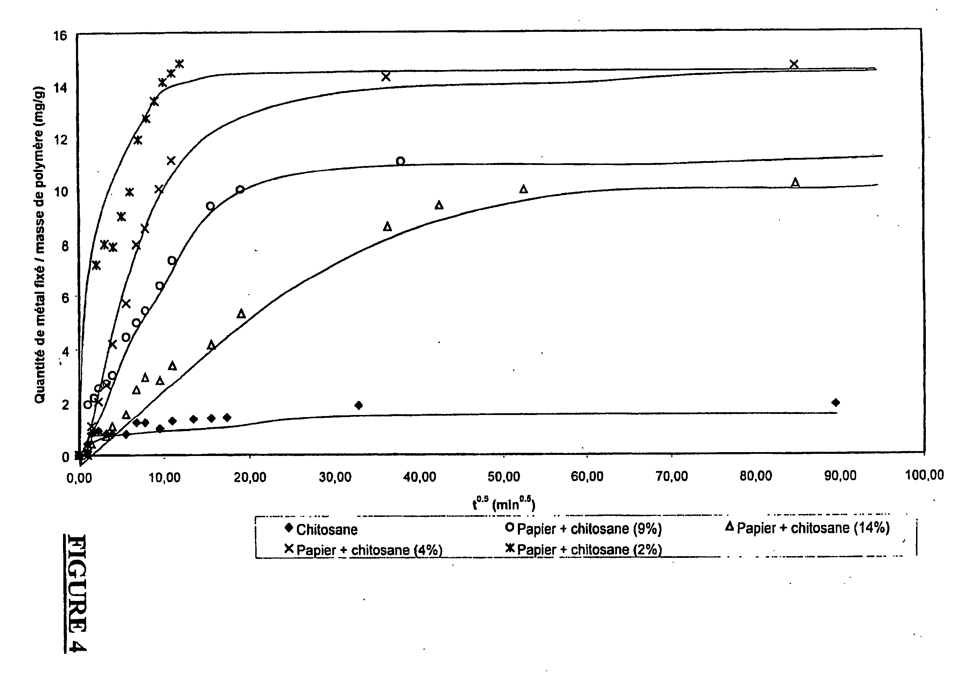

Comme le montre la figure 4, plus la proportion de chitosane est faible et meilleure est la capacité de fixation du matériau de l'invention des ions cuivre dans la gamme étudiée.

### Exemple 3

Dans cet exemple, on étudie l'efficacité du filtre de l'invention en dynamique pour un débit d'effluent élevé.

Le système de filtration utilisé est le filtre-presse, équipement le plus courant et le plus simple dans le domaine de la filtration des liquides. L'effluent est purifié lors de son passage à travers le média filtrant constitué d'une succession de filtres. Le nombre de filtres consécutifs peut être adapté en fonction des performances recherchées. Dans cette étude, chaque filtre de surface 550 cm² est constitué d'un papier 100, g/m² contenant 1 % de chitosane en masse du degré de désacétylation égal à 98 %.

L'effluent modèle utilisé est une solution de cuivre à 6,35 mg/l qui passe à travers le média filtrant avec un débit de 4 200 1/h, le volume d'effluent testé est de 10 litres.

Le taux de cuivre retenu en fonction du nombre de filtres utilisés pour constituer le média filtrant est représenté dans le tableau suivant.

| | | | |
|---|---|---|---|
| Nombre de filtres | 4 | 8 | 10 |
| Taux de cuivre retenu | 64 % | 67 % | 70 % |

Avec 10 filtres, 70 % du cuivre est fixé en moins de 9 secondes.

### Exemple 4

Dans cet exemple, on compare en dynamique, dans les mêmes conditions que dans l'exemple 3, l'influence de la quantité de chitosane dans le papier filtre pour des concentrations de 1 et 5 %. Le degré de désacétylation est de 98 %.

| % chitosane | Nombre de filtres | Taux de cuivre retenu | Quantité de cuivre retenu | Quantité de chitosane | Taux de fixation du cuivre sur le chitosane |
|---|---|---|---|---|---|
| 1 | 4 | 64 % | 41 mg | 0,2 g | 20 % |
| 5 | 4 | 68% | 43 mg | 1g | 4% |

Comme le montre le tableau ci-dessus, plus la quantité de chitosane dans la fourchette testée est faible et plus l'efficacité de la fixation est élevée.

## Revendications

1. Utilisation d'un matériau à base de fibres organiques et/ou inorganiques et de chitosane pour la fixation des ions métalliques contenus dans un effluent, ***caractérisée* en ce que**:
- le chitosane représente entre 0,01 et 20% en poids sec des fibres;
- le degré de desacetylation du chitosane est supérieur à 90%;
- le matériau se présente sous la forme d'une feuille obtenue par voie papetière après mélange du chitosane avec les fibres organiques et/ou inorganiques.

2. Utilisation selon la revendication 1, ***caractérisée* en ce que** le poids moléculaire du chitosane est compris entre 10⁴ et 10⁶ g.mol⁻¹.

3. Utilisation selon la revendication 1, ***caractérisée* en ce que** le chitosane représente entre 0,01 et 10 % en poids sec des fibres , avantageusement entre 0,01 et 2 %.

4. Utilisation selon la revendication 1, ***caractérisée* en ce que** le degré de désacétylation du chitosane est supérieur à 95 %.

5. Utilisation selon la revendication 1, ***caractérisée* en ce que** la feuille contient exclusivement des fibres de cellulose.

## Claims

1. Use of a material based on organic and/or inorganic fibres and chitosan for fixing metal ions contained in an effluent, **characterised in that**
- the chitosan represents between 0.01 and 20 % by dry weight of fibres;
- the degree of deacetylation of the chitosan is higher than 90%,;
- the material is in the form of a sheet made by means of a paper-machine process of a mixture of chitosan and organic and/or inorganic fibres.

2. Use according to Claim 1, **characterised in that** the molecular weight of the chitosan is between 10⁴ and 10⁶ g.mol⁻¹.

3. Use according to Claim 1, **characterised in that** the chitosan represents between 0.01 and 10 % by dry weight of fibres, advantageously between 0.01 and 2 %.

4. Use according to Claim 1, **characterised in that** the degree of deacetylation of chitosan is higher than 95 %.

5. Use according to Claim 1, **characterised in that** the sheet consists exclusively of cellulose fibres.

## Patentansprüche

1. Verwendung eines auf organischen und/oder anorganischen Fasern und Chitosan basierenden Materials zur Fixierung von Metall-Ionen, die in Abwasser enthalten sind,
**dadurch gekennzeichnet, dass**
- das Chitosan zwischen 0,01 und 20% des Trockengewichts der Fasern ausmacht;
- der Desacetylierungsgrad des Chitosans höher als 90% ist;
- das Material in Form eines Blattes vorliegt, das nach Mischen des Chitosans mit den organischen und/oder anorganischen Fasern auf dem Wege der Papierherstellung erhalten wird.

2. Verwendung nach Anspruch 1, **dadurch gekennzeichnet, dass** das Molekulargewicht des Chitosans zwischen 10⁴ und 10⁶ g.mol⁻¹ ist.

3. Verwendung nach Anspruch 1, **dadurch gekennzeichnet, dass** das Chitosan zwischen 0,01 und 10% des Trockengewichts der Fasern ausmacht, vorteilhaft zwischen 0,01 und 2%.

4. Verwendung nach Anspruch 1, **dadurch gekennzeichnet, dass** der Desacetylierungsgrad des Chitosans höher als 95% ist.

5. Verwendung nach Anspruch 1, **dadurch gekennzeichnet, dass** das Blatt ausschließlich Cellulose-Fasern enthält.
